# EUROPÄISCHE PATENTSCHRIFT

(11) **EP 0 803 320 B1**
(45) Veröffentlichungstag und Bekanntmachung des Hinweises auf die Patenterteilung: **29.05.2002**
(21) Anmeldenummer: 97102934.3
(22) Anmeldetag: 22.02.1997
(51) Int. Cl.: B23Q 11/08

(54) **Werkzeugmaschine mit einer Lamellentüre**
Machine tool with slat door
Machine outil avec porte à lamelles

(30) Priorität: 25.04.1996 DE 19616483
(43) Veröffentlichungstag der Anmeldung: 29.10.1997
(73) Patentinhaber: CHIRON-WERKE GMBH & CO. KG, 78532 Tuttlingen (DE)
(72) Erfinder: Haninger, Rudolf, 78606 Seitingen (DE); Winkler, Hans-Henning, Dr.-Ing, 78532 Tuttlingen (DE)
(74) Vertreter: Otten, Hajo, Dr.-Ing.

(56) Entgegenhaltungen:
- EP-A- 0 041 164
- DE-A- 4 214 928
- DE-U- 29 500 395

## Beschreibung

Die vorliegende Erfindung betrifft eine Werkzeugmaschine mit einem der Bearbeitung von Werkstücken dienenden Arbeitsraum, der durch eine Verkleidung nach außen abgeschlossen ist, in der eine durch zumindest eine Schiebetür verschließbare Öffnung zum Zugriff auf den Arbeitsraum vorgesehen ist, wobei die Schiebetür vertikal angeordnete, gelenkig miteinander verbundene Lamellenelemente umfaßt sowie an einer unteren Führungsschiene gehalten ist und zumindest einige Lamellenelemente mit einem unteren Führungsteil versehen sind.

Eine derartige Werkzeugmaschine ist aus der DE 295 00 395 U bekannt.

Die bekannte Werkzeugmaschine umfaßt eine faltenartige Schutzabdeckung aus vertikal angeordneten, gelenkig miteinander verbundenen Lamellenelementen. Zwischen den einzelnen Lamellenelementen sind einstückig aus Kunststoff gefertigte Verbindungselemente mit Sollknickstellen angeordnet. Die Verbindungselemente sind an ihren Enden mit Wülsten ausgebildet, die in in Längsrichtung der Lamellenelemente verlaufende Kanäle in den Lamellenelementen eingreifen.

Die bekannte Schutzabdeckung kann ziehharmonikaartig zusammengeschoben werden, wobei sich die einzelnen Lamellenelemente querstellen und mit ihren Breitseiten aneinanderlegen.

Zu diesem Zweck sind die Lamellenelemente jeweils an einer oberen und einer unteren Führungsschiene gehalten und weisen an ihrem oberen und unteren Ende jeweils einen Führungskorper auf, der gleitverschieblich und schwenkbeweglich in der Führungsschiene gelagert ist.

In dem Arbeitsraum bekannter Werkzeugmaschinen werden Werkstücke bearbeitet, die in der Regel in eine Aufnahme auf einem Werkstücktisch eingespannt sind. Die Werkzeugmaschinen weisen eine Spindel auf, in die wahlweise Werkzeuge eingewechselt werden, die zum Bearbeiten der Werkstücke dienen.

Der Arbeitsraum ist durch eine Verkleidung nach außen abgeschlossen, um die Umgebung sowie das Bedienungspersonal vor während der Bearbeitung der Werkstücke im Arbeitsraum herumfliegenden Spänen sowie herumspritzendem Bohr- und Kühlwasser zu schützen. Diese Verkleidung weist eine Öffnung auf, durch die hindurch Rüstarbeiten an der Werkzeugmaschine möglich sind sowie das Auswechseln der Werkstücke erfolgt. Diese Öffnung ist in der Regel mit einer Tür verschlossen, die zu Rüst- oder Werkzeugwechselzwecken von einer Bedienungsperson geöffnet wird.

An diese sogenannte Bedienertür sind eine ganze Reihe von Anforderungen zu stellen, sie muß zunächst einmal sehr schnell und einfach zu öffnen sein. Ferner muß dafür gesorgt werden, daß der Türmechanismus nicht durch herumfliegende Späne sowie Bohr- und Kühlwasser so weit verschmutzt wird, daß die Tür klemmt und sich schließlich gar nicht mehr öffnen läßt.

Eine weitere Anforderung bei diesen Bedienertüren besteht darin, daß sie die Öffnung sehr zuverlässig abdichten müssen, damit nicht im Bereich der Tür die Abdeckung eine Schwachstelle aufweist.

Eine weitere Anforderung an derartige Werkzeugmaschinen besteht darin, daß die Öffnung sehr groß sein muß, damit die Rüstarbeiten und der Werkstückwechsel auf möglichst bedienerfreundliche Weise durchgeführt werden können. Je kleiner nämlich die Bedienertür und damit die entsprechende Öffnung ist, desto schwieriger sind die im Inneren des Arbeitsraumes von dem Bedienungspersonal durchzuführenden Tätigkeiten.

Eine weitere, der zuletzt genannten Anforderung gegenläufige Anforderung besteht darin, daß die Außenabmaße der Werkzeugmaschinen möglichst gering sein sollen, wobei auch der vor der Werkzeugmaschine zu deren Bedienung erforderliche Platz möglichst gering sein soll. Dies ist vor dem Hintergrund zu sehen, daß derartige Werkzeugmaschinen häufig Teil von numerisch gesteuerten Bearbeitungszentren sind, bei denen viele Werkzeugmaschinen nebeneinander sowie einander gegenüber auf möglichst geringem Raum angeordnet sind.

Die im Stand der Technik bekannten Bedienertüren sind z.B. Klapp- und Schwenktüren, die zur Seite oder nach oben geklappt bzw. geschwenkt werden. Andererseits sind auch die eingangs bereits erwähnten Schiebetüren bekannt, die entweder oberhalb oder seitlich neben der Tür einen entsprechenden Platz erfordern, um die verschobenen Türteile aufzunehmen. Bei derartigen Schiebetüren steht für die Bedieneröffnung häufig weniger als die Hälfte der gesamten Breite der Werkzeugmaschine zur Verfügung. Da außerdem häufig noch Bedienungselemente etc. an der Vorderseite der Werkzeugmaschine anzuordnen sind, beträgt die Breite der Bedieneröffnung häufig nur 1/3 der Gesamtbreite der Werkzeugmaschine.

Insbesondere wenn teleskopartige, mehrlagige Türen oder Schiebetüren verwendet werden, ist nicht nur der große mechanische Aufwand von Nachteil, hier ist auch die Abdeckung des Türmechanismus gegenüber dem Arbeitsraum häufig so schlecht, daß der Türmechanismus verschmutzen und damit verklemmen kann.

Bei den bekannten Werkzeugmaschinen und den bekannten Bedienertüren ist daher von Nachteil, daß die Werkzeugmaschinen einerseits sehr breit und/oder die durch die Bedienertür verschließbare Öffnung relativ schmal ist, wobei häufig auch nur eine geringe Höhe zur Verfügung steht. Derartige Werkzeugmaschinen sind folglich nicht bedienerfreundlich.

Bei den bereits erwähnten Schwenktüren ist ihre häufig sehr komplizierte Konstruktionsform von Nachteil, wobei ein weiterer Nachteil darin besteht, daß diese Schwenktüren in den Arbeitsraum hineinschwenken, wo folglich eine Kollisionsgefahr mit der Spindel besteht.

Werden die Schwenktüren dagegen nach außen geschwenkt, so ist der Platzbedarf vor der Werkzeugmaschine sehr groß, was ebenfalls von Nachteil ist.

Allgemein ist bei den bekannten Bedienertüren noch von Nachteil, daß sie häufig keine gute Abdichtung des Arbeitsraumes bieten und wegen ihrer mechanisch zum Teil sehr aufwendigen Konstruktion nicht schnell und leicht zu bedienen sind.

Vor diesem Hintergrund ist es Aufgabe der vorliegenden Erfindung, die eingangs genannte Werkzeugmaschine derart weiterzubilden, daß bei konstruktiv einfachem und preiswertem Aufbau eine bezogen auf die Breite der Werkzeugmaschine möglichst große Öffnung vorgesehen werden kann, wobei die Schiebetür für eine gute Abdichtung der Öffnung sorgen und sich schnell und leicht bedienen lassen soll.

Bei der eingangs genannten Werkzeugmaschine wird diese Aufgabe erfindungsgemäß dadurch gelöst, daß an dem unteren Führungsteil an dessen von dem Arbeitsraum abgewandter Seite eine Führungsnut vorgesehen ist, in die die Führungsschiene eingreift.

Die der Erfindung zugrunde liegende Aufgabe wird auf diese Weise vollkommen gelöst. Die Schiebetür besteht aus gelenkig miteinander verbundenen Elementen, die sich "um die Ecke schieben" oder auch aufwickeln lassen, so daß neben der Öffnung, die von der Schiebetür verschlossen wird, kein großer Platzbedarf zur Aufnahme der verschobenen Türteile mehr erforderlich ist. Ein großer Teil der Breite der neuen Werkzeugmaschine steht somit für die Öffnung zur Verfügung.

Wichtig bei dieser Erfindung ist unter anderem die gelenkige Verbindung zwischen benachbarten Lamellenelementen, die durch die gelenkigen Verbindungen sehr gut gegeneinander abgedichtet werden können und dennoch eine platzsparende Unterbringung der Tür im aufgeschobenen Zustand ermöglichen.

Ein weiterer Vorteil bei dieser Konstruktion besteht darin, daß oberhalb und unterhalb der Schiebetür keine aufwendigen Konstruktionen vorgesehen sein müssen, so daß zum einen die oben erwähnte Kollisionsgefahr beseitigt ist und zum anderen die Öffnung eine beträchtliche Höhe einnehmen kann, da der Platzbedarf oberhalb und unterhalb der Schiebetür gering ist.

Insgesamt kann die neue Werkzeugmaschine damit mit einer sehr großen Öffnung zum Zugriff auf den Arbeitsraum versehen werden.

Die untere Führungsschiene sorgt dabei für eine sehr gute Abdichtung des Arbeitsraumes nach unten. Durch die gewählte Anordnung der Führungsnut an der von dem Arbeitsraum abgewandten Seite des Führungsteiles und den Eingriff der Führungsschiene in diese Führungsnut ist ferner die untere Führung der Schiebetür vor Verschmutzung geschützt, so daß die Schiebetür insgesamt leichtgängig bleibt. Dabei ist von Vorteil, daß die Führungsnut auf der von dem Arbeitsraum abgewandten Seite angeordnet ist, wo die Verschmutzungsgefahr deutlich geringer ist als auf der gegenüberliegenden Seite.

In einer Weiterbildung ist es dann bevorzugt, wenn zwischen je zwei benachbarten Lamellenelementen ein Verbindungselement vorgesehen ist, das im wesentlichen dieselbe Höhe aufweist wie die Lamellenelemente und zwei äußere Eingriffselemente zur Verbindung mit den beiden Lamellenelementen sowie einen zwischen den Eingriffselementen befindlichen, gelenkigen Steg umfaßt.

Hier ist von Vorteil, daß ein derartiges Verbindungselement eine sehr gute Abdichtung zwischen benachbarten Lamellenelementen ermöglicht und dennoch für die gelenkige Verbindung sorgt. Diese Maßnahme ist also konstruktiv von Vorteil.

In einer Weiterbildung ist es dann bevorzugt, wenn das Verbindungselement einstückig aus Kunststoff gefertigt und im Bereich des Steges flexibel ausgebildet ist.

Hier ist von Vorteil, daß in den Verbindungselementen selbst keine Lücken vorhanden sind, so daß sich die Lamellen selbst nicht gegenseitig überlappen müssen, um für eine gute Abdichtung des Arbeitsraumes zu sorgen.

Andererseits ist es bevorzugt, wenn das Verbindungselement einstückig aus Kunststoff gefertigt und im Bereich des Steges mit einer Sollknickstelle ausgebildet ist.

Hier ist von Vorteil, daß auch der Steg mit einer gewissen Festigkeit ausgelegt werden kann, so daß eine Beschädigung des Verbindungselementes durch herumfliegende Späne keine große Gefahr darstellt. Diese Maßnahme ist also ebenfalls konstruktiv von Vorteil.

Dabei ist es bevorzugt, wenn die Sollknickstelle ein Bereich mit einer verglichen mit dem übrigen Steg geringeren Dicke ist.

Hier ist von Vorteil, daß die Sollknickstelle lediglich durch eine Materialverjüngung herbeigeführt wird, die sich preiswert und konstruktiv einfach herstellen läßt.

Dabei ist es weiter von Vorteil, wenn die Eingriffselemente als Wülste ausgebildet sind und die Lamellenelemente zur Aufnahme der Wülste Kanäle aufweisen, die einen seitlichen Schlitz umfassen, durch den der Steg nach außen ragt.

Auch diese Maßnahme ist konstruktiv von Vorteil, da sich die Verbindung zwischen den Lamellenelementen sowie den Verbindungselementen sehr einfach dadurch herstellen läßt, daß die Wülste einfach in die Kanäle eingeschoben werden. Die im Querschnitt folglich hantelförmigen Verbindungselemente sind darüber hinaus konstruktiv sehr einfach aufgebaut, so daß sie sehr preiswerte Elemente darstellen.

Allgemein ist es bevorzugt, wenn die Schiebetür über Laufrollen an einer oberen Laufleiste aufgehängt ist.

Hier ist von Vorteil, daß zum Bedienen der Schiebetür nur eine geringe Kraft erforderlich ist.

Weiter ist es bevorzugt, wenn oberhalb der Laufleiste als Schutz eine Abdeckung vorgesehen ist.

Hier ist von Vorteil, daß kein Schmutz auf die Laufleiste und/oder die Laufrollen gelangen kann, so daß die Schiebetür nicht verklemmen kann.

Weiter ist es bevorzugt, wenn zumindest einige Lamellenelemente mit einem oberen Aufhängungsteil versehen sind, an dessen von dem Arbeitsraum abgewandter Seite eine Laufrolle gelagert ist, über die vorzugsweise ein Dachabschnitt des Aufhängungsteiles übersteht.

Diese Maßnahme ermöglicht einen noch besseren Schutz der Laufrollen vor Schmutz, so daß hier insgesamt dafür gesorgt ist, daß die Schiebetür auf vorteilhafte Weise auch nach längerem Betrieb der neuen Werkzeugmaschine leichtgängig bleibt.

Ferner ist von Vorteil, daß die Eingriffselemente, also die Laufrolle, auf der von dem Arbeitsraum abgewandten Seite angeordnet sind, wo die Verschmutzungsgefahr deutlich geringer ist als auf der gegenüberliegenden Seite.

Allgemein ist es bevorzugt, wenn die Laufleiste eine im Querschnitt U-förmige, nach oben offene Profilschiene umfaßt, an deren innerem Schenkel die Laufrollen angreifen, wobei vorzugsweise die Führungsschiene eine im Querschnitt U-förmige, nach unten offene Profilschiene umfaßt, an deren innerem Schenkel die Führungsnut angreift.

Diese Maßnahme ist konstruktiv von Vorteil und bietet außerdem Vorteile bei der Montage, also dem Anbau der Schiebetür an der neuen Werkzeugmaschine. Die Schiebetür wird zunächst unten in die Führungsschiene eingehakt, wobei die Führungsnut den inneren Schenkel der unteren Profilschiene umgreift. Danach wird die Schiebetür so weit hochgehoben, bis die Laufrollen auf den inneren Schenkel der oberen Profilschiene aufgesetzt werden können. Die Schiebetür hängt jetzt oben über die Laufrollen an der Laufleiste und ist unten über die Führungsnut an der Führungsschiene geführt.

Dabei ist es bevorzugt, wenn die Führungsnut eine erste, in der Draufsicht kreisbogenförmige Seitenwand sowie eine zweite Seitenwand umfaßt, die in ihrem mittleren Bereich eine Aussparung aufweist.

Bei dieser Maßnahme ist von Vorteil, daß die Führungsnut das jeweilige Lamellenelement sowohl in geraden als auch in gebogenen Bereichen des inneren Schenkels der unteren Profilschiene sicher halten kann. Diese Maßnahme ist also konstruktiv von Vorteil, denn ohne größeren Aufwand lassen sich mechanisch zuverlässige Führung sowie schmutzsichere Anordnung miteinander vereinigen.

Allgemein ist es bevorzugt, wenn die Schiebetür zumindest um eine Lamellenelementbreite breiter ist als die Öffnung.

Bei dieser Maßnahme ist von Vorteil, daß sich durch Überlappung eine einfache Randabdichtung ergibt, die Lamellen stehen an beiden Seiten der Öffnung über diese über.

Dabei ist es weiter bevorzugt, wenn an dem ersten und dem letzten Lamellenelement jeweils ein Anschlagelement angeordnet ist, das bei geschlossener Schiebetür in Anlage mit einem Blech ist, das von der Verkleidung vorsteht.

Auf diese einfache Weise wird zum einen ein Anschlag für die Schiebebewegung der Schiebetür und zum anderen eine sichere Randabdichtung erreicht.

Dabei ist es ferner bevorzugt, wenn das in Richtung der Schließbewegung der Schiebetür erste Lamellenelement bei geschlossener Schiebetür zumindest teilweise in einem seitlich offenen Kanal sitzt, der sich im wesentlichen über die gesamte Höhe des Lamellenelementes erstreckt und von einem an dem ersten Lamellenelement befestigten Winkel gegenüber dem Arbeitsraum abgedichtet wird.

Bei dieser Maßnahme ist von Vorteil, daß sich eine labyrinthartige Schmutzfalle bildet, so daß für eine sehr gute Abdichtung des Arbeitsraumes gesorgt wird, ohne daß konstruktiv aufwendige Maßnahmen hierzu erforderlich sind.

Allgemein ist es bevorzugt, wenn die Schiebetür in dem Arbeitsraum angeordnet ist.

Hier ist von Vorteil, daß sich auf diese Weise zum einen eine einfachere Abdichtung der Öffnung in der Verkleidung erreichen läßt, die Schiebetür muß lediglich in ihren Abmaßen größer gewählt werden als die Öffnung selbst. Ein weiterer Vorteil liegt darin, daß außerhalb der Werkzeugmaschine kein weiterer Raum erforderlich ist, um die geöffnete Schiebetür unterzubringen.

Allgemein ist es dabei bevorzugt, wenn die Schiebetür in dem Arbeitsraum über vorzugsweise an der Verkleidung angeordnete, gebogen verlaufende Führungsteile geführt ist, die sich zumindest teilweise längs einer Seitenwand der Verkleidung erstrecken.

Hier ist von Vorteil, daß die Lamellenelemente der Schiebetür beim Öffnen derselben nicht aufgerollt werden müssen, sondern sozusagen um die Ecke umgelenkt werden, so daß sich die Schiebetür im geöffenten Zustand größtenteils im Inneren der Werkzeugmaschine aber längs einer Seitenwand erstreckt. Neben der durch die Schiebetür zu verschließenden Öffnung in der Verkleidung muß damit lediglich so viel Platz vorgesehen werden, daß die Umlenkung der Lamellenelemente von der Vorderseite zu der Seitenwand möglich wird. Hier ist also von Vorteil, daß die neue Werkzeugmaschine trotz einer sehr breiten Öffnung zum Zugriff auf den Arbeitsraum nur eine geringe Gesamtbreite aufweist.

Dabei ist es bevorzugt, wenn zwischen dem Aufhängungsteil und dem von diesem gehaltenen Lamellenelement eine das letztere nach oben abdichtende Dichtung vorgesehen ist.

Hier ist von Vorteil, daß hohle, also sehr leichte Lamellenelemente verwendet werden können, die nach oben nicht zwingend flüssigkeitsdicht abgeschlossen sein müssen. Dieser Schutz wird durch die Dichtung bewirkt, die verhindert, daß Kühlmittel in das Lamellenelement eindringt und dieses im Laufe des Betriebes so weit auffüllt, daß das zulässige Gewicht des Lamellenelementes überschritten wird. Die Erfinder der vorliegenden Anmeldung haben nämlich erkannt, daß durch eine derartige Dichtung sehr einfache und preiswerte Lamellenelemente eingesetzt werden können, die sich nicht allmählich mit Kühlmittel füllen, also ihr geringes Gewicht beibehalten, so daß sich die Bedienertür auch nach längerem Betrieb der neuen Werkzeugmaschine noch schnell und einfach öffnen bzw. schließen läßt.

Weitere Vorteile ergeben sich aus der Beschreibung und der beigefügten Zeichnung.

Es versteht sich, daß die vorstehend genannten und die nachstehend noch zu erläuternden Merkmale nicht nur in den jeweils angegebenen Kombinationen, sondern auch in anderen Kombinationen oder in Alleinstellung verwendbar sind, ohne den Rahmen der vorliegenden Erfindung zu verlassen.

Ein Ausführungsbeispiel der Erfindung ist in der Zeichnung dargestellt und wird in der nachfolgenden Beschreibung näher erläutert. Es zeigen:
- Fig. 1: eine schematische Vorderansicht der neuen Werkzeugmaschine;
- Fig. 2: einen Schnitt durch die Verkleidung der Werkzeugmaschine aus Fig. 1 im Bereich der Öffnung, längs der Linie II-II aus Fig. 1;
- Fig. 3: einen Schnitt durch das untere Führungsteil längs der Linie III-III aus Fig. 2;
- Fig. 4: eine ausschnittsweise Draufsicht auf zwei durch ein Verbindungselement gelenkig miteinander verbundene Lamellenelemente;
- Fig. 5: eine vergrößerte Darstellung des Verbindungselementes aus Fig. 4; und
- Fig. 6: eine Draufsicht auf einen horizontalen Schnitt durch die Verkleidung der Werkzeugmaschine aus Fig. 1 im Bereich der Öffnung, längs der Linie VI-VI aus Fig. 1.

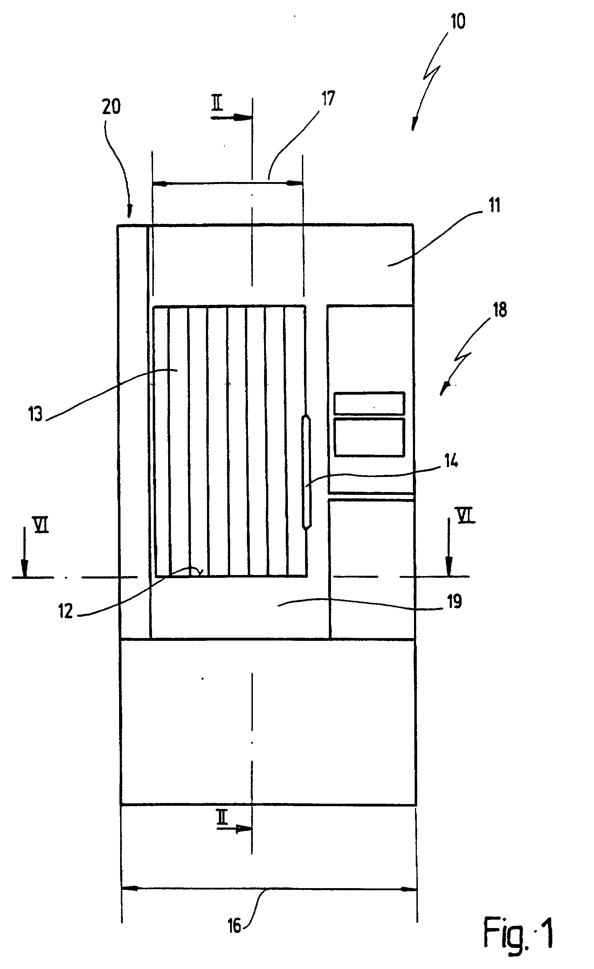

In Fig. 1 ist mit 10 allgemein eine Werkzeugmaschine bezeichnet, die dort lediglich schematisch dargestellt ist. Die Werkzeugmaschine 10 umfaßt eine Verkleidung 11 mit einer Öffnung 12, durch die hindurch in das Innere der Werkzeugmaschine 10 eingegriffen werden kann.

Die Öffnung 12 ist durch eine Schiebetür 13 verschlossen, die über einen schematisch angedeuteten Handgriff 14 in Fig. 1 nach links geschoben werden kann. Selbstverständlich kann die neue Werkzeugmaschine 10 auch mit zwei Schiebetüren ausgerüstet sein, die dann von der Mitte der Öffnung 12 her zu beiden Seiten aufgeschoben werden.

Die Werkzeugmaschine 10 weist eine bei 16 angedeutete Breite auf, während die Öffnung 12 eine bei 17 gezeigte Breite umfaßt. Die Breite 17 der Öffnung 12 überstreicht mehr als die Hälfte der Breite 16 der Werkzeugmaschine 10, wobei die Öffnung 12 auch eine beträchtliche Höhe aufweist. Insgesamt hat die Öffnung 12 damit eine Größe, die ein sehr leichtes Zugreifen in den Arbeitsraum der Werkzeugmaschine 10 ermöglicht.

Neben der Öffnung 12 sind noch schematisch Bedienungselemente 18 angedeutet, die ebenfalls in einer Vorderseite 19 der Werkzeugmaschine 10 angeordnet sind.

Links neben der Öffnung 12 ist noch ein geringer Raum 20 frei, der in noch zu beschreibender weise die aufgeschobene Schiebetür 13 aufnimmt, die gelenkig miteinander verbundene Lamellenelemente 21 umfaßt, die vertikal angeordnet sind.

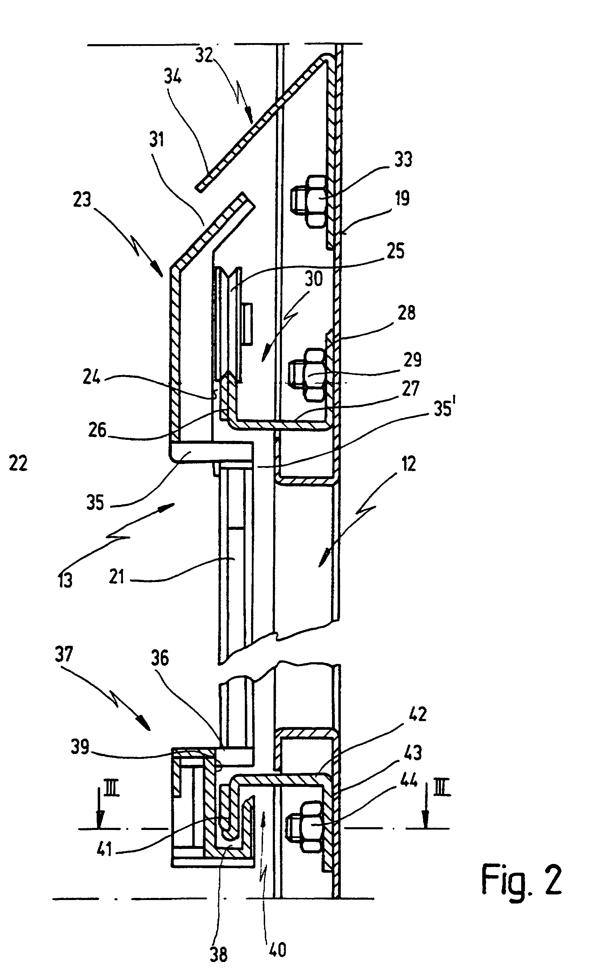

Fig. 2 zeigt einen Schnitt längs der Linie II-II aus Fig. 1 durch die Verkleidung 11 im Bereich der Öffnung 12. Die Fig. 2 zeigt die in der Verkleidung 11 vorgesehene Öffnung 12, durch die hindurch auf den Arbeitsraum 22 der neuen Werkzeugmaschine 10 zugegriffen wird. In der gezeigten Stellung der Schiebetür 13 ist die Öffnung 12 durch diese jedoch verschlossen.

Das in Fig. 2 schematisch angedeutete Lamellenelement 21 ist an seinem oberen Ende mit einem Aufhängungsteil 23 versehen, an dessen von dem Arbeitsraum 22 abgewandter Seite 24 eine Laufrolle 25 drehbar angeordnet ist. Die Laufrolle 25 sitzt auf einem inneren Schenkel 26 einer nach oben offenen, U-förmigen Profilschiene 27, die an ihrem zweiten Schenkel 28 mittels einer Schraube 29 an die Vorderseite der Verkleidung 11 angeschraubt ist. Die Schraube 29 sitzt dabei auf einem Schweißbolzen.

Die Profilschiene 27 bildet eine obere Laufleiste 30, an der über die Laufrollen 25 die gesamte Schiebetür 13 hängt.

Zum Schutz der Laufrolle 25 weist das Aufhängungsteil 23 noch einen Dachabschnitt 31 auf, der in Fig. 2 nach schräg oben rechts verläuft, so daß Späne sowie Bohr- und Kühlwasser nicht auf die Laufrolle 25 gelangen können.

Oberhalb des Aufhängungsteiles 23 ist eine weitere Abdeckung 32 vorgesehen, die mittels einer Schraube 33 an der Verkleidung 11 befestigt ist. Diese Abdeckung 32 weist eine Schrägfläche 34 auf, die über den Dachabschnitt 31 hinüberragt, so daß Späne sowie Bohr- und Kühlwasser auch nicht hinter das Aufhängungsteil 23 und auf die Profilschiene 27 gelangen können. Damit ist der gesamte Aufhängungsmechanismus der Schiebetür 13 vor Verschmutzung aus dem Arbeitsraum 22 geschützt.

Es sei noch erwähnt, daß sich die Aufhängeteile 23 benachbarter Lamellenelemente 21 wechselseitig senkrecht zur Zeichenebene der Fig. 2 überlappen, so daß auch zwischen benachbarten Lamellenelementen 21 kein Schmutz auf die Profilschiene 27 gelangen kann.

Das aus Kunststoff gefertigte, für sich zumindest seitlich dichte Lamellenelement 21 ist an einem Boden 35 des Aufhängungsteiles 23 vorzugsweise durch eine Clipsverbindung befestigt. Zwischen dem Boden 35 und dem Lamellenelement 21 ist dabei eine Dichtung 35' vorgesehen, die verhindert, daß von oben Kühlmittel in das hohle Lamellenelement 21 eindringt. An seinem unteren Ende ist das Lamellenelement 21 ebenfalls über eine Clipsverbindung, die in Fig. 2 nicht dargestellt ist, mit einer Basis 36 eines unteren Führungsteiles 37 verbunden.

Das untere Führungsteil 37 umfaßt eine nach oben offene Führungsnut 38, die an einer von dem Arbeitsraum 22 abgewandten Seite 39 des unteren Führungsteiles 37 angeordnet ist.

Die Führungsnut 38 ist im Eingriff mit einer unteren Führungsschiene 40, deren innerer Schenkel 41 in der Führungsnut 38 angeordnet ist. Die untere Führungsschiene 40 umfaßt eine U-förmige Profilschiene 42, deren äußerer Schenkel 43 über eine Schraube 44 an der Verkleidung 11 befestigt ist.

Die Profilschiene 42 ist in Fig. 2 nach unten offen, so daß sich kein Schmutz auf dem inneren Schenkel 41 ablagern kann. Da sich die Führungsnut 38 auf der von dem Arbeitsraum 22 abgewandten Seite 39 des Führungsteiles 37 befindet und außerdem unterhalb der Basis 36 angeordnet ist, kann Schmutz auch nicht in die Führungsnut 38 gelangen.

Auch bei dem unteren Führungsteil 37 ist die Konstruktion so gewählt, daß sich benachbarte Führungsteile 37 gegenseitig überlappen, so daß auch im unteren Führungsbereich der Schiebetür 13 nicht die Gefahr des Verklemmens durch Verschmutzung aus dem Arbeitsraum 22 besteht.

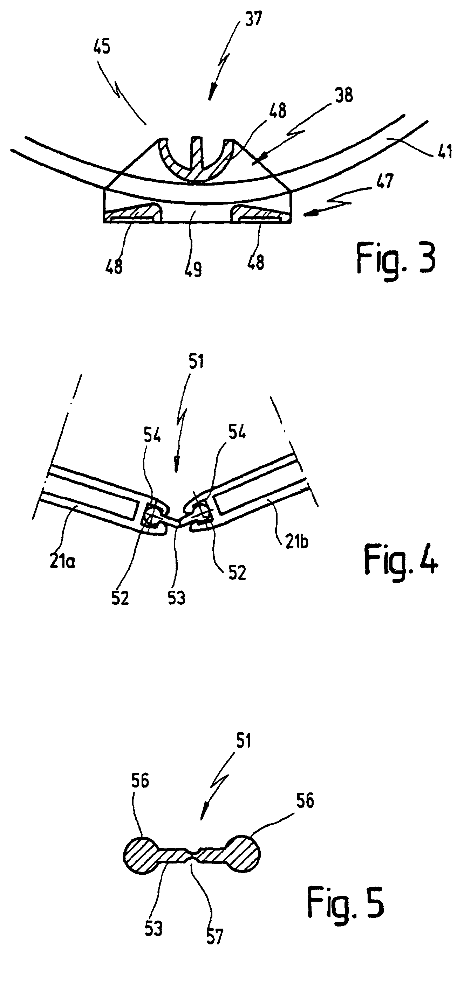

In Fig. 3 ist eine Schnittdarstellung längs der Linie III-III aus Fig. 2 durch das untere Führungsteil 37 im Bereich der Führungsnut 38 gezeigt. Es ist zu erkennen, daß die Führungsnut 38 eine erste Seitenwand 45 umfaßt, die die Form eines Kreisbogenabschnittes 46 aufweist. Ferner weist die Führungsnut 38 eine Seitenwand 47 auf, die zwei seitliche Keile 48 umfaßt. Zwischen den beiden Keilen 48 ist ein mittlerer Bereich der zweiten Seitenwand 47 durch eine Aussparung 49 freigelassen.

Die Anordnung der beiden Seitenwände 45 und 47 ermöglicht es, daß die Führungsnut 38 sowohl auf einem geraden wie auch auf einem gebogenen Schenkel 41 mit geringem seitlichem Spiel geführt wird, so daß die Schiebetür 13 im Bereich des Raumes 20 aufgewickelt oder umgelenkt werden kann.

Hierzu ist es erforderlich, die Lamellenelemente 21 gelenkig miteinander zu verbinden. Wie dies geschieht, wird jetzt anhand von Fig. 4 erörtert.

In Fig. 4 sind zwei benachbarte Lamellenelemente 21a und 21b dargestellt, zwischen denen ein Verbindungselement 51 angeordnet ist. Dieses Verbindungselement 51 umfaßt zwei äußere Eingriffselemente 52, mit denen es mit den Lamellenelementen 51a und 51b verbunden ist. Die beiden Eingriffselemente 52 sind über einen flexiblen oder gelenkigen Steg 53 miteinander verbunden. Es sei noch erwähnt, daß die Eingriffselemente 52 in Kanälen 54 sitzen, die endseitig an den Lamellenelementen 21a und 21b angeordnet sind und eine seitliche Öffnung aufweisen, durch die der Steg 53 hindurchragt.

In Fig. 5 ist das Verbindungselement 51 vergrößert dargestellt. Das Verbindungselement 51 hat im Querschnitt eine Hantelform und weist zwei äußere Wülste 56 auf, die in den Kanälen 54 der Lamellenelemente 21a und 21b zu liegen kommen. In dem Steg 53 ist eine Sollknickstelle 57 vorgesehen, die durch eine Materialverjüngung bewirkt wird. Aufgrund dieser Sollknickstelle 57 können die beiden Wülste 56 um einen begrenzten Winkel zueinander geknickt werden, wie dies in Fig. 4 gezeigt ist.

Das Verbindungselement 51 ist ein einstückiges Kunststoffteil, das sich über die gesamte Höhe der Lamellenelemente 21 erstreckt und somit für eine völlig dichte Abdichtung zwischen benachbarten Lamellenelementen 21a und 21b sorgt.

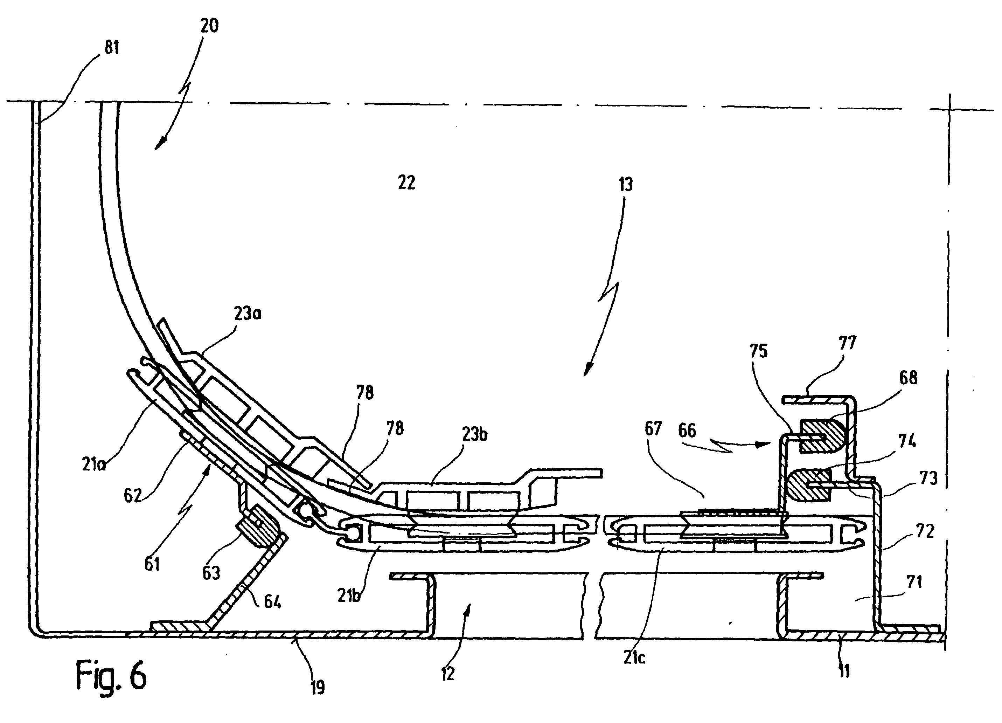

Fig. 6 zeigt einen Ausschnitt eines Horizontalschnittes längs der Linie VI-VI aus Fig. 1 im Bereich der Öffnung 12, deren mittlerer Bereich jedoch weggelassen wurde.

In Fig. 6 ist zunächst die gebogen verlaufende untere Führungsschiene 40 zu erkennen, über der die einzelnen Lamellenelemente 21a, 21b und 21c hängen. Auf die Darstellung der oberen Laufleiste 30 sowie des unteren Führungsteiles 37 wurde aus Gründen der Übersichtlichkeit jeweils verzichtet.

In Fig. 6 ist die Schiebetür 13 im geschlossenen Zustand dargestellt. Es ist zu erkennen, daß das erste Lamellenelement 21a nicht mehr zum Verschließen der Öffnung 12 verwendet wird sondern dazu dient, für eine gute Randabdichtung im Bereich der Öffnung 12 zu sorgen. Mit anderen Worten, die Schiebetür 13 ist um mehr als eine Lamellenelementbreite breiter als die Öffnung 12.

Um diese Randabdichtung zu bewirken, ist an dem Lamellenelement 21a auf der von dem Arbeitsraum 22 abgewandten Seite ein Anschlagelement 61 vorgesehen, das ein Blech 62 umfaßt, an dem ein Gummipuffer 63 angeordnet ist. Dieser Gummipuffer 63 ist in der in Fig. 6 gezeigten, geschlossenen Stellung der Schiebetür 13 in Anlage mit einem abgewinkelten Blech 64, das an der Vorderseite 19 befestigt ist. Das abgewinkelte Blech 64 sowie der Gummipuffer 63 erstrecken sich über die gesamte Höhe der Öffnung 12 und überragen diese oben und unten, so daß hierdurch insgesamt der linke Rand der Öffnung 12 gut gegenüber dem Arbeitsraum 22 abgedichtet ist.

An dem in Schiebeschließrichtung der Schiebetür 13 ersten Lamellenelement 21c ist ein weiteres Anschlagelement 66 vorgesehen, das einen Blechwinkel 67 sowie einen daran befestigten Gummipuffer 68 aufweist.

Das Lamellenelement 21c ragt mit seinem vorderen Ende in einen Kanal 71 hinein, der durch ein Winkelblech 72 gebildet wird. Ein äußerer Schenkel 73 dieses Winkelbleches 72 ist mit einem weiteren Gummipuffer 74 versehen, der in Anlage mit einem Arm 75 des Blechwinkels 67 ist. An dem Schenkel 73 ist noch ein weiteres Winkelblech 77 befestigt, mit dem der Gummipuffer 68 in Anlage ist.

Auf diese Weise verschließt das Anschlagelement 66 den Kanal 71 gegenüber dem Arbeitsraum 22, so daß hier eine labyrinthartige Abdichtung des rechten Randes der Schiebetür 13 an der Öffnung 12 vorliegt. Selbstverständlich erstrecken sich auch hier die Gummipuffer 68 und 74 sowie die zugeordneten Bleche 67 und 77 über mehr als die Höhe der Öffnung 12, so daß auch hier kein Schmutz aus dem Arbeitsraum 22 nach außen dringen kann.

Abschließend sei noch auf die Aufhängungsteile 23a und 23b der Lamellenelemente 21a und 21b hingewiesen, die sich - wie oben bereits erwähnt - gegenseitig mit ihren Auslegern 78 überlappen, so daß zwischen benachbarten Aufhängungsteilen 23a und 23b kein Schmutz aus dem Arbeitsraum 22 auf die in Fig. 6 nicht dargestellte obere Laufschiene 30 gelangen kann. In ähnlicher Weise überlappen sich auch die unteren Führungsteile 37.

In Fig. 6 ist zu erkennen, daß die untere Führungsschiene 40 sowie dementsprechend die nicht dargestellte obere Laufleiste 30 gebogen verlaufende Führungsteile sind, die im Bereich der Öffnung 12 parallel zu der Vorderseite 19 verlaufen und links neben der Öffnung 12 in gebogene Abschnitte übergehen, die wiederum in parallel zu einer Seitenwand 81 verlaufende Abschnitte münden. Auf diese Weise wird die Schiebetür 13 beim Verschieben in Fig. 6 nach links Lamellenelement für Lamellenelement um 90° umgelenkt, so daß die Schiebetür 13 im aufgeschobenen Zustand nahezu vollständig parallel zu der Seitenwand 81 verläuft und sich dort in dem Raum 20 befindet. Die Breite des Raumes 20 muß gerade so groß sein, daß die Umlenkung der Lamellenelemente 21 um 90° möglich wird. Aus Fig. 6 ist zu entnehmen, daß diese Breite etwas dem Ein- bis Zweifachen einer Lamellenelementbreite entspricht.

## Patentansprüche

1. Werkzeugmaschine mit einem der Bearbeitung von Werkstücken dienenden Arbeitsraum (22), der durch eine Verkleidung (11) nach außen abgeschlossen ist, in der eine durch zumindest eine Schiebetür (13) verschließbare Öffnung (12) zum Zugriff auf den Arbeitsraum (22) vorgesehen ist, wobei die Schiebetür (13) vertikal angeordnete, gelenkig miteinander verbundene Lamellenelemente (21) umfaßt sowie an einer unteren Führungsschiene (40) gehalten ist und zumindest einige Lamellenelemente (21) mit einem unteren Führungsteil (37) versehen sind,
**dadurch gekennzeichnet, daß** an dem unteren Führungsteil (37) an dessen von dem Arbeitsraum (22) abgewandter Seite (39) eine Führungsnut (38) vorgesehen ist, in die die Führungsschiene (40) eingreift.

2. Werkzeugmaschine nach Anspruch 1, **dadurch gekennzeichnet, daß** zwischen je zwei benachbarten Lamellenelementen (21a, 21b) ein Verbindungselement (51) vorgesehen ist, das im wesentlichen dieselbe Höhe aufweist wie die Lamellenelemente (21a, 21b) und zwei äußere Eingriffselemente (52) zur Verbindung mit den beiden benachbarten Lamellenelementen (21a, 21b) sowie einen zwischen den Eingriffselementen (52) befindlichen, gelenkigen Steg (53) umfaßt.

3. Werkzeugmaschine nach Anspruch 2, **dadurch gekennzeichnet, daß** das Verbindungselement (51) einstückig aus Kunststoff gefertigt und im Bereich des Steges (53) flexibel ausgebildet ist.

4. Werkzeugmaschine nach Anspruch 2, **dadurch gekennzeichnet, daß** das Verbindungselement (51) einstückig aus Kunststoff gefertigt und im Bereich des Steges (53) mit einer Sollknickstelle (57) ausgebildet ist.

5. Werkzeugmaschine nach Anspruch 4, **dadurch gekennzeichnet, daß** die Sollknickstelle (57) ein Bereich mit einer verglichen mit dem übrigen Steg (53) geringeren Dicke ist.

6. Werkzeugmaschine nach einem der Ansprüche 2 bis 5, **dadurch gekennzeichnet, daß** die Eingriffselemente (52) als Wülste (56) ausgebildet sind und die Lamellenelemente (21a, 21b) zur Aufnahme der Wülste (56) Kanäle (54) aufweisen, die einen seitlichen Schlitz umfassen, durch den der Steg (53) nach außen ragt.

7. Werkzeugmaschine nach einem der Ansprüche 1 bis 6, **dadurch gekennzeichnet, daß** die Schiebetür (13) über Laufrollen (25) an einer oberen Lauf leiste (30) aufgehängt ist.

8. Werkzeugmaschine nach Anspruch 7, **dadurch gekennzeichnet, daß** oberhalb der Laufleiste (30) als Schutz eine Abdeckung (32) vorgesehen ist.

9. Werkzeugmaschine nach Anspruch 7 oder 8, **dadurch gekennzeichnet, daß** zumindest einige Lamellenelemente (21) mit einem oberen Aufhängungsteil (23) versehen sind, an dessen von dem Arbeitsraum (22) abgewandter Seite (24) eine Laufrolle (25) gelagert ist, über die vorzugsweise ein Dachabschnitt (31) des Aufhängungsteiles (23) übersteht.

10. Werkzeugmaschine nach einem der Ansprüche 7 bis 9, **dadurch gekennzeichnet, daß** die obere Laufleiste (30) eine im Querschnitt U-förmige, nach oben offene Profilschiene (27) umfaßt, an deren innerem Schenkel (26) die Laufrollen (25) angreifen.

11. Werkzeugmaschine nach einem der Ansprüche 7 bis 10, **dadurch gekennzeichnet, daß** die Führungsschiene (40) eine im Querschnitt U-förmige, nach unten offene Profilschiene (42) umfaßt, an deren innerem Schenkel (41) die Führungsnut (38) angreift.

12. Werkzeugmaschine nach einem der Ansprüche 1 bis 11, **dadurch gekennzeichnet, daß** die Führungsnut (38) eine erste, in der Draufsicht kreisbogenförmige Seitenwand (45, 46) sowie eine zweite Seitenwand (47, 48) umfaßt, die in ihrem mittleren Bereich eine Aussparung (49) aufweist.

13. Werkzeugmaschine nach einem der Ansprüche 1 bis 12, **dadurch gekennzeichnet, daß** die Schiebetür (13) zumindest um eine Lamellenelementbreite breiter ist als die Öffnung (12).

14. Werkzeugmaschine nach einem der Ansprüche 1 bis 13, **dadurch gekennzeichnet, daß** an dem ersten und dem letzten Lamellenelement (21a, 21c) jeweils ein Anschlagelement (61, 66) angeordnet ist, das bei geschlossener Schiebetür (13) in Anlage mit einem Blech (64, 77) ist, das von der Verkleidung (11) vorsteht.

15. Werkzeugmaschine nach einem der Ansprüche 1 bis 14, **dadurch gekennzeichnet, daß** das in Richtung der Schließbewegung der Schiebetür (13) erste Lamellenelement (21c) bei geschlossener Schiebetür (13) zumindest teilweise in einem seitlich offenen Kanal (71) sitzt, der sich im wesentlichen über die gesamte Höhe des Lamellenelementes (21c) erstreckt und von einem an dem ersten Lamellenelement (21c) befestigten Winkel (67) gegenüber dem Arbeitsraum (22) abgedichtet wird.

16. Werkzeugmaschine nach einem der Ansprüche 1 bis 15, **dadurch gekennzeichnet, daß** die Schiebetür (13) in dem Arbeitsraum (22) angeordnet ist.

17. Werkzeugmaschine nach einem der Ansprüche 1 bis 16, **dadurch gekennzeichnet, daß** die Schiebetür (13) in dem Arbeitsraum (22) über vorzugsweise an der Verkleidung (11) angeordnete, gebogen verlaufende Führungsteile (30, 40) geführt ist, die sich zumindest teilweise längs einer Seitenwand (81) der Verkleidung (11) erstrecken.

18. Werkzeugmaschine nach einem der Ansprüche 9 bis 17, **dadurch gekennzeichnet, daß** zwischen dem Aufhängungsteil (23) und dem von diesem gehaltenen Lamellenelement (21) eine das letztere nach oben abdichtende Dichtung (35') vorgesehen ist.

## Claims

1. Machine tool having a working space (22) in which workpieces are to be machined and which is closed off against the outside by a case (11) in which an opening (12), which can be closed by at least one sliding door (13), is provided to give access to the working space (22), wherein the sliding door (13) comprises vertically arranged slat elements (21) that are connected one with the other, the sliding door (13) being held on a lower guide rail (40), and at least some of the slat elements (21) being provided with a lower guide element (37), **characterized in that** a guide channel (38) is provided on said lower guide element (37) on its side facing away from the working space (22), for being engaged by the guide rail (40).

2. Machine tool of claim 1, **characterized in that** between every two neighboring slat elements (21a, 21b) each a connection element (51) is provided, which has substantially the same height as the slat elements (21a, 21b) and which comprises two outer engaging elements (52) for connection with the two slat elements (21a, 21b), as well as a flexible web (53) arranged between the engaging elements (52).

3. Machine tool of claim 2, **characterized in that** the connection element (51) is made as a single piece from a plastic material and is flexible in the area of the web (53).

4. Machine tool of claim 2, **characterized in that** the connection element (51) is made as a single piece from a plastic material and is given a predetermined buckling point (57) in the area of the web (53).

5. Machine tool of claim 4, **characterized in that** the predetermined buckling point (57) is an area of reduced thickness, compared with the remaining web (53).

6. Machine tool of any of claims 2 to 5, **characterized in that** the engaging elements (52) are designed as beads (56) and the slat elements (21a, 21b) are provided with channels (54) receiving the beads (56), the channels comprising a lateral slot through which the web (53) projects to the outside.

7. Machine tool of any of claims 1 to 6, **characterized in that** the sliding door (13) is suspended on an upper runner rail (30) via rollers (25).

8. Machine tool of claim 7, **characterized in that** a cover (32) is provided as a protection above the runner rail (30).

9. Machine tool of claim 7 or 8, **characterized in that** at least some of the slat elements (21) are provided with an upper suspension element (23) with a roller (25) mounted on its side facing away from the working space (22) and, preferably, a roof section (31) of the suspension element (23) projecting over the roller (25).

10. Machine tool of any of claims 7 to 9, **characterized in that** the upper runner rail (30) comprises an upwardly open profile rail (27) of U-shaped cross-section, the inner leg (26) of which is engaged by the rollers (25).

11. Machine tool of any of claims 7 to 10, **characterized in that** the guide rail (40) comprises a downwardly open profile rail (42) with U-shaped cross-section, the inner leg (41) of which is engaged by the guide channel (38).

12. Machine tool of any of claims 1 to 11, **characterized in that** the guide channel (38) comprises a first arc-shaped side wall (45, 46), viewed from above, and a second side wall (47, 48) provided with a recess (49) in its central area.

13. Machine tool of any of claims 1 to 12, **characterized in that** the sliding door (13) is wider than the opening (12) by at least the width of one slat element.

14. Machine tool of any of claims 1 to 13, **characterized in that** the first and the last slat elements (21a, 21c) are each provided with a stop element (61, 66) which, in the closed condition of the sliding door (13), is in engagement with a plate (64, 77) that projects from the case (11).

15. Machine tool of any of claims 1 to 14, **characterized in that** in the closed condition of the sliding door (13) the first slat element (21c), in the direction of the closing movement of the sliding door (13), is seated at least in part in a laterally open channel (71) which extends substantially over the full height of the slat element (21c) and is sealed from the working space (22) by an angled sheet (67) fastened on the first slat element (21c).

16. Machine tool of any of claims 1 to 15, **characterized in that** the sliding door (13) is arranged within the working space (22).

17. Machine tool of any of claims 1 to 16, **characterized in that** the sliding door (13) is guided within the working space (22) on curved guide elements (30, 40), preferably arranged on the case (11), that extend at least in part along one side wall (81) of the case (11).

18. Machine tool of any of claims 9 to 17, **characterized in that** between the suspension element (23) and the slat element (21) held by it a seal (35') is provided that seals the slat element (21) off against the top.

## Revendications

1. Machine-outil comportant une chambre de travail (22) qui sert à l'usinage de pièces et qui est fermée vers l'extérieur par un revêtement (11) dans lequel est prévue une ouverture (12), qui peut être fermée par au moins une porte coulissante (13), pour accéder à la chambre de travail (22), la porte coulissante (13) comprenant des éléments à lamelles (21) disposés verticalement et reliés entre eux de manière articulée, et étant maintenue contre un rail de guidage inférieur (40), et au moins quelques éléments à lamelles (21) sont pourvus d'une partie de guidage inférieure (37),
**caractérisée en ce que** sur le côté (39) de la partie de guidage inférieure (37) opposé à la chambre de travail (22), est prévue une rainure de guidage (38) dans laquelle s'engage le rail de guidage (40).

2. Machine-outil selon la revendication 1, **caractérisée en ce qu'**il est prévu, entre deux éléments à lamelles (21a, 21b) adjacents, un élément de liaison (51) qui présente sensiblement la même hauteur que les éléments à lamelles (21 a, 21 b) et qui comprend deux éléments d'engagement (52) extérieurs pour la liaison avec les deux éléments à lamelles (21 a, 21b) adjacents, ainsi qu'une entretoise articulée (53) se trouvant entre les éléments d'engagement (52).

3. Machine-outil selon la revendication 2, **caractérisée en ce que** l'élément de liaison (51) est fabriqué d'un seul tenant en matière plastique et est réalisé flexible dans la zone de l'entretoise (53).

4. Machine-outil selon la revendication 2, **caractérisée en ce que** l'élément de liaison (51) est fabriqué d'un seul tenant en matière plastique et est réalisé avec un point destiné à se plier (57) dans la zone de l'entretoise (53).

5. Machine-outil selon la revendication 4, **caractérisée en ce que** le point destiné à se plier (57) est une zone d'épaisseur réduite par rapport au reste de l'entretoise (53).

6. Machine-outil selon l'une des revendications 2 à 5, **caractérisée en ce que** les éléments d'engagement (52) sont réalisés sous la forme de bourrelets (56) et les éléments à lamelles (21a, 21b) présentent, pour recevoir les bourrelets (56), des canaux (54) qui comprennent une fente latérale à travers laquelle l'entretoise (53) dépasse vers l'extérieur.

7. Machine-outil selon l'une des revendications 1 à 6, **caractérisée en ce que** la porte coulissante (13) est suspendue, par des galets de roulement (25), à une baguette de roulement supérieure (30).

8. Machine-outil selon la revendication 7, **caractérisée en ce qu'**il est prévu un capot (32) pour servir de protection au-dessus de la baguette de roulement (30).

9. Machine-outil selon la revendication 7 ou 8, **caractérisée en ce qu'**au moins quelques éléments à lamelles (21) sont pourvus d'un élément de suspension supérieur (23) sur le côté (24) duquel, opposé à la chambre de travail (22), est monté un galet de roulement (25) au-dessus duquel se tient de préférence une partie formant toit (31) de l'élément de suspension (23).

10. Machine-outil selon l'une des revendications 7 à 9, **caractérisée en ce que** la baguette de roulement supérieure (30) comprend un rail profilé (27) ouvert vers le haut, de section transversale en U, sur l'aile intérieure (26) duquel agissent les galets de roulement (25).

11. Machine-outil selon l'une des revendications 7 à 10, **caractérisée en ce que** le rail de guidage (40) comprend un rail profilé (42) ouvert vers le bas, de section transversale en U, sur l'aile intérieure (41) duquel agit la rainure de guidage (38).

12. Machine-outil selon l'une des revendications 1 à 11, **caractérisée en ce que** la rainure de guidage (38) comprend une première paroi latérale (45, 46), en forme d'arc de cercle, vue de dessus, ainsi qu'une deuxième paroi latérale (47, 48) qui présente une découpe (49) dans sa zone centrale.

13. Machine-outil selon l'une des revendications 1 à 12, **caractérisée en ce que** la porte coulissante (13) est plus large que l'ouverture (12) d'au moins la largeur d'un élément à lamelles.

14. Machine-outil selon l'une des revendications 1 à 13, **caractérisée en ce que** sur le premier et le dernier élément à lamelles (21a, 21c) est disposé un élément de butée (61, 66) respectif qui, lorsque la porte coulissante (13) est fermée, est en contact avec une tôle (64, 77) qui dépasse du revêtement (11).

15. Machine-outil selon l'une des revendications 1 à 14, **caractérisée en ce que** le premier élément à lamelles (21c), dans le sens du mouvement de fermeture de la porte coulissante (13), se trouve, lorsque la porte coulissante (13) est fermée, au moins en partie dans un canal (71) ouvert latéralement qui s'étend sensiblement sur toute la hauteur de l'élément à lamelles (21c) et qui est rendu étanche par rapport à la chambre de travail (22), par une cornière (67) fixée au premier élément à lamelles (21c).

16. Machine-outil selon l'une des revendications 1 à 15, **caractérisée en ce que** la porte coulissante (13) est disposée dans la chambre de travail (22).

17. Machine-outil selon l'une des revendications 1 à 16, **caractérisée en ce que** la porte coulissante (13) est guidée dans la chambre de travail (22) par des éléments de guidage (30, 40) arqués, qui sont disposés de préférence sur le revêtement (11) et qui s'étendent au moins en partie le long d'une paroi latérale (81) du revêtement (11).

18. Machine-outil selon l'une des revendications 9 à 17, **caractérisée en ce qu'**il est prévu, entre l'élément de suspension (23) et l'élément à lamelles (21) maintenu sur celui-ci, une garniture d'étanchéité (35') qui rend étanche ce dernier vers le haut.
